# EUROPÄISCHE PATENTANMELDUNG

(11) **EP 1 501 250 A2**
(43) Veröffentlichungstag der Anmeldung: **26.01.2005**
(21) Anmeldenummer: 04017298.3
(22) Anmeldetag: 22.07.2004
(51) Int. Cl.: H04L 25/02

(54) **Verfahren zur drahtlosen Datenübertragung zwischen einer Basisstation und einem Transponder**

(30) Priorität: 23.07.2003 DE 10335009
(71) Anmelder: ATMEL Germany GmbH, 74072 Heilbronn (DE)
(72) Erfinder: Fischer, Martin, Dipl.-Ing., 74629 Gleichen (DE); Friedrich, Ulrich, Dipl.-Ing., 74248 Ellhofen (DE)

(57) **Zusammenfassung**

Die Erfindung bezieht sich auf ein Verfahren zur drahtlosen Datenübertragung zwischen einer Basisstation (BS) und einem, insbesondere passiven, Transponder (TR), bei dem zu übertragende Datenpakete (DP) auf elektromagnetische Trägerwellen aufmoduliert werden und die Datenpakete (DP) einen Kopfabschnitt mit mindestens einem Symbol und mindestens einen weiteren Abschnitt umfassen.

Erfindungsgemäß wird im Transponder (TR) die Zeitdauer von wenigstens einem Symbol im Kopfabschnitt ermittelt und in Abhängigkeit von der ermittelten Zeitdauer ein die Kodierungsund/oder Dekodierungs-Betriebsart bestimmender Parameter (f, I) eingestellt.

Verwendung z.B. für transponderbasierte Identifikationssysteme und Remote-Sensoren.

## Beschreibung

Die Erfindung bezieht sich auf ein Verfahren zur drahtlosen Datenübertragung zwischen einer Basisstation und einem, insbesondere passiven, Transponder nach dem Oberbegriff des Anspruchs 1. Derartige Übertragungsverfahren zwischen einer oder mehreren Basisstationen bzw. Lesegeräten und einem oder mehreren Transpondern finden beispielsweise bei kontaktlosen Identifikationssystemen oder sogenannten Radio-Frequency-Identification(RFID)-Systemen Verwendung. Auf dem Transponder können auch Sensoren, beispielsweise zur Temperaturmessung, integriert sein. Derartige Transponder werden auch als Remote-Sensoren bezeichnet.

Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung mit UHF oder Mikrowellen im Fernfeld der Basisstation wird in der Regel die sogenannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift Keying(ASK)-Unterträgermodulation, bei der die Frequenz oder die Phasenlage des Unterträgers geändert wird.

In der älteren deutschen Patentanmeldung 102 04 347 und der DE 101 38 217 A1 sind Verfahren zur drahtlosen Datenübertragung zwischen einer Basisstation und einem Transponder beschrieben, bei denen zu übertragende Datenpakete einen Kopfabschnitt, einen Datenabschnitt mit zu übertragenden Nutzdaten und einen Endabschnitt umfassen. Die zu übertragenden Nutzdaten werden mit Hilfe von Symbolen kodiert und übertragen, die sich im Kopfabschnitt des Datenpakets befinden. Ein Symbol dient hierbei zur Definition bzw. Interpretation des Wertes eines Zeichens. Ein derartiges Symbol wird üblicherweise mit Hilfe einer Zeitdauer zwischen zwei aufeinanderfolgenden Feldlücken, sogenannten "notches", im Kopfabschnitt dargestellt. Eine derartige Feldlücke kann bei einer Amplitudenmodulation beispielsweise durch Unterdrückung bzw. Dämpfung des Trägersignals oder bei einer Zweiseitenbandmodulation durch Umschalten der Phasenlage des Trägersignals erzeugt werden. Der Transponder dekodiert empfangene Datenpakete auf Basis der im Kopfabschnitt enthaltenen Symbole, bzw. anhand der den Symbolen zugeordneten Zeitdauern, indem er zur Bestimmung des Wertes eines Zeichens dessen Zeitdauer mit den Zeitdauern der Symbole vergleicht.

Bei der Datenübertragung vom Transponder zur Basisstation ist in manchen Fällen vorgesehen, jedes zu übertragende Zeichen oder Bit synchron zu einem durch die Basisstation vorgegebenen Takt zu übertragen, wobei der Modulationszustand am Beginn des Zeitintervalls festgelegt bzw. bekannt ist und ein Wechsel des Modulationszustands nach der Zeitdauer des dem Zeichen im Kopfabschnitt zugeordneten Symbols erfolgt. Üblicherweise erfolgt die Datenübertragung alternativ dazu asynchron.

Durch die Wahl des Zeitintervalls bzw. der den Symbolen zugeordneten Zeitdauern ist es möglich, die Übertragungsrate in einem gewissen Bereich an die Übertragungsbedingungen anzupassen. Der Bereich der Übertragungsrate wird unter anderem dadurch begrenzt, dass der Transponder bzw. eine im Transponder hierfür zuständige Kodierungs-/Dekodierungseinheit unterschiedliche, zu den Symbolen bzw. Zeichen gehörige Zeitdauern zeitlich nicht mehr auflösen, d.h. nicht mehr unterscheiden kann. Eine höhere zeitliche Auflösung geht in der Regel mit einem höheren Stromverbrauch des Transponders einher, da beispielsweise die Taktfrequenz eines zur Zeitdauernbestimmung eingesetzten Zählers oder der Ladestrom einer funktional entsprechenden analogen RC-Stufe in der Kodierungs-/Dekodierungseinheit erhöht werden muss. Da im Fernfeld der von der Basisstation emittierten elektromagnetischen Wellen eine geringe Leistungsdichte vorherrscht, die zur Versorgung des Transponders dienen kann, sinkt die erzielbare Reichweite mit steigendem Stromverbrauch. Der die Kodierung bzw. Dekodierung bestimmende Parameter bzw. die Kodierungs-/Dekodierungseinheit wird folglich herkömmlicherweise statisch derart konfiguriert, dass sich ein ausreichender Kompromiss zwischen hohem zeitlichem Auflösungsvermögen und dadurch bedingter hoher erzielbarer Übertragungsrate einerseits und geringem Stromverbrauch andererseits ergibt.

Der Erfindung liegt als technisches Problem die Bereitstellung eines Verfahrens zur Datenübertragung der eingangs genannten Art zugrunde, das eine Datenübertragung zwischen der Basisstation und dem Transponder mit relativ großer Reichweite über einen weiten Übertragungsratenbereich hinweg bei optimiertem Leistungsbedarf ermöglicht und mit relativ geringem Aufwand realisierbar ist.

Die Erfindung löst dieses Problem durch die Bereitstellung eines Verfahrens mit den Merkmalen des Anspruchs 1.

Erfindungsgemäß wird im Transponder die Zeitdauer von wenigstens einem Symbol im Kopfabschnitt ermittelt und in Abhängigkeit von der ermittelten Zeitdauer ein die Kodierungs- und/oder Dekodierungs-Betriebsart bestimmender Parameter eingestellt. Mit Hilfe dieser Maßnahme kann dynamisch eine Anpassung der Kodierungs- bzw. Dekodierungseigenschaften des Transponders an vorherrschende Übertragungsbedingungen realisiert werden. Beispielsweise kann bei einer großen Entfernung zwischen der Basisstation und dem Transponder durch geeignete Wahl der Zeitdauer eines Symbols im Kopfabschnitt der die Kodierungs- und/oder Dekodierungs-Betriebsart bestimmende Parameter derart eingestellt werden, dass der durch eine Kodierungs-/Dekodierungseinheit verursachte Stromverbrauch gering ist, wodurch eine große Übertragungsreichweite erzielbar ist. Wenn hingegen ausreichend Leistung im Transponder zur Verfügung steht, kann der Parameter und dadurch die Kodierungs-/Dekodierungseinheit derart eingestellt werden, dass eine hohe Datenrate erzielbar ist. Der Übertragungsratenbereich wird somit im Vergleich zu einem Verfahren, bei dem die Kodierung bzw. Dekodierung mit konstanten Einstellungen durchgeführt wird, deutlich erhöht.

In einer Weiterbildung des Verfahrens nach Anspruch 2 bestimmt der Parameter die zeitliche Auflösung der Kodierung und/oder der Dekodierung. Durch eine derartige Anpassung der zeitlichen Auflösung ist eine wirkungsvolle Steuerung des Stromverbrauchs des Transponders möglich. Möglich sind auch eine Bestimmung der Frequenz- und/oder Amplitudenauflösung des Transponders durch den Parameter oder eine Umschaltung zwischen unterschiedlichen Kodierungs- bzw. Dekodierungsverfahren.

In einer Weiterbildung des Verfahrens nach Anspruch 3 ist der Parameter ein Ladestrom einer RC-Schaltung, die zur Ermittlung der Zeitdauern der Symbole dient. Hierdurch kann beispielsweise ein Kondensator der RC-Schaltung mit einem definierten Ladestrom während der Dauer eines bestimmten Symbols über einen Widerstand der RC-Schaltung aufgeladen und der erzielte Spannungswert in einer Speicherschaltung gespeichert werden.

In einer Weiterbildung des Verfahrens nach Anspruch 4 ist der Parameter eine Taktfrequenz einer Zählerschaltung, die zur Ermittlung der Zeitdauern der Symbole dient. Die Steuerung der Taktfrequenz der Zählerschaltung in Abhängigkeit von der Zeitdauer eines Symbols im Kopfabschnitt stellt sicher, dass einerseits die Taktfrequenz der Zählerschaltung derart eingestellt wird, dass die zeitliche Auflösung ausreicht, um alle Zeichen sicher zu kodieren bzw. zu dekodieren, und andererseits die Taktfrequenz so minimiert ist, dass der Stromverbrauch des Transponders in Bezug auf die Datenübertragungsrate minimal ist.

In einer Weiterbildung des Verfahrens nach Anspruch 5 wird der Parameter in Abhängigkeit von der ermittelten Zeitdauer des ersten Symbols im Kopfabschnitt eingestellt. Dies führt zu einer einfachen Realisierung der Einstellung des Parameters, da für das erste Symbol ein Symbol mit beispielsweise maximaler oder minimaler Länge vereinbart werden kann, wodurch sichergestellt wird, dass folgende Symbole nicht zu einem Überschreiten bzw. Unterschreiten von Messwerten bei der Dekodierung führen.

In einer Weiterbildung des Verfahrens nach Anspruch 6 nimmt der Ladestrom vor dem Empfang eines ersten Datenpakets einen vorgebbaren Minimalwert ein, der bei Empfang des ersten Datenpakets erhöht wird, wenn ein zur ermittelten Zeitdauer des Symbols gehöriger Spannungswert der RC-Schaltung kleiner als oder gleich groß wie ein einstellbarer Grenzwert ist, und beibehalten wird, wenn der zu der Zeitdauer des Symbols gehörige Spannungswert größer als der einstellbare Grenzwert ist.

In einer Weiterbildung des Verfahrens nach Anspruch 7 nimmt die Taktfrequenz vor dem Empfang eines ersten Datenpakets einen vorgebbaren Minimalwert ein, der bei Empfang des ersten Datenpakets erhöht wird, wenn ein zur ermittelten Zeitdauer des Symbols gehöriger Zählerwert der Zählerschaltung kleiner als oder gleich groß wie ein einstellbarer Grenzwert ist, und beibehalten wird, wenn der zu der Zeitdauer des Symbols gehörige Zählerwert größer als der einstellbare Grenzwert ist. Auf diese Weise wird in Analogie zu Anspruch 6 gewährleistet, dass ein Transponder im Fernfeld der Basisstation, wenn zur Versorgung des Transponders wenig Energie zur Verfügung steht, mit minimaler Taktfrequenz bzw. minimalem Ladestrom, d.h. minimalem Stromverbrauch, betreibbar ist. Wenn der Zählerwert kleiner als der einstellbare Grenzwert ist, reicht die Taktfrequenz zur zuverlässigen Dekodierung bzw. Kodierung nicht aus und wird erhöht. Wenn genügend Versorgungsleistung zur Verfügung steht, um den dadurch bedingten erhöhten Stromverbrauch sicherzustellen, kann die Datenübertragungsrate entsprechend erhöht werden. Ist der Stromverbrauch in diesem Fall zu hoch, kann beispielsweise ein Reset des Transponders erfolgen, wodurch dieser nicht weiter an der Datenübertragung teilnimmt. Da die Datenübertragung grundsätzlich mit geringem Stromverbrauch beginnt, ist die Basisstation in der Lage, Transponder anzusprechen, die sich weit von ihr entfernt befinden. Die Basisstation kann mit Hilfe der Zeitdauer des Symbols steuern, ob ein Transponder in ihrem Fernfeld mit geringer Datenübertragungsrate an einer Kommunikation teilnimmt oder nicht.

In einer Weiterbildung des Verfahrens nach Anspruch 8 ist der mindestens eine weitere Abschnitt ein Datenabschnitt, dessen Daten mit Hilfe mindestens eines weiteren Symbols des Kopfabschnitts kodiert und übertragen werden.

Vorteilhafte Ausführungsformen der Erfindung sind in den Zeichnungen dargestellt und werden nachfolgend beschrieben. Hierbei zeigen:
- Fig. 1: ein schematisches Blockschaltbild eines RFID-Systems mit einer Basisstation und einem Transponder,
- Fig. 2: ein schematisches Diagramm eines Datenpaketes mit einem Kopfabschnitt, einem Datenabschnitt und einem Endabschnitt und
- Fig. 3: ein schematisches Diagramm des Kopfabschnitts von Fig. 2.

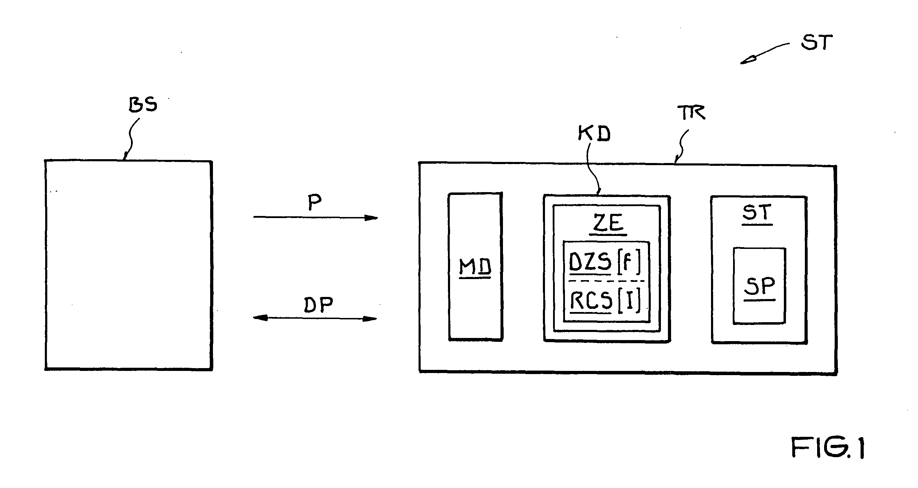

Fig. 1 zeigt ein schematisches Blockschaltbild eines RFID-Systems ST mit einer Basisstation BS und einem passiven Transponder TR. Zwischen der Basisstation BS und dem Transponder TR werden drahtlos bidirektional Datenpakete DP übertragen. Die Basisstation BS emittiert elektromagnetische Trägerwellen, die zur Datenübertragung vom Transponder TR zur Basisstation BS entsprechend den an die Basisstation BS zu übertragenden Datenpaketen DP moduliert und reflektiert werden. Der Transponder TR entnimmt die zu seiner Versorgung benötigte Leistung P dem von der Basisstation BS emittierten elektromagnetischen Feld.

Der Transponder TR umfasst neben weiteren, nicht gezeigten Schaltungsteilen eine Modulator-/Demodulator-Einheit MD, die beispielsweise eine Receiver-Signal-Strength-Indicator(RSSI)-Schaltung zur Signalrückgewinnung umfassen kann, eine mit dieser gekoppelte Kodierungs-/Dekodierungs-Einheit KD und eine mit der Kodierungs-/Dekodierungs-Einheit KD gekoppelte Steuereinheit ST. Im Transponder TR empfangene Eingangssignale werden in der Modulator-/Demodulator-Einheit MD demoduliert und zu sendende Signale werden entsprechend moduliert. Eine Kodierung bzw. Dekodierung von Datenpaketen DP findet in der Kodierungs-/Dekodierungs-Einheit KD statt. Hierzu umfasst diese eine Zeiterfassungseinheit ZE zur Ermittlung der Zeitdauern von Modulationszuständen bzw. zeitlichen Abständen von Feldlücken, die als eine digitale Zählerschaltung DZS oder alternativ als eine analoge RC-Schaltung RCS ausgebildet sein kann.

Die Steuereinheit ST dient unter anderem zur Ansteuerung der Kodierungs-/Dekodierungs-Einheit KD und umfasst einen Speicher SP, der zum Speichern von in der Zeiterfassungseinheit ZE ermittelten Werten und Referenzwerten dient. Wenn die Zeiterfassungseinheit ZE als digitale Zählerschaltung DZS verwirklicht ist, wird die Taktfrequenz f der Zählerschaltung DZS durch die Steuereinheit ST bereitgestellt. Wenn die Zeiterfassungseinheit ZE als RC-Schaltung RCS ausgebildet ist, wird deren Ladestrom I durch die Steuereinheit ST vorgegeben. Die Taktfrequenz f bzw. der Ladestrom I ist hierbei der die Kodierungs- bzw. Dekodierungs-Betriebsart bestimmende Parameter, da er das zeitliche Auflösungsvermögen der Zeiterfassungseinheit ZE festlegt.

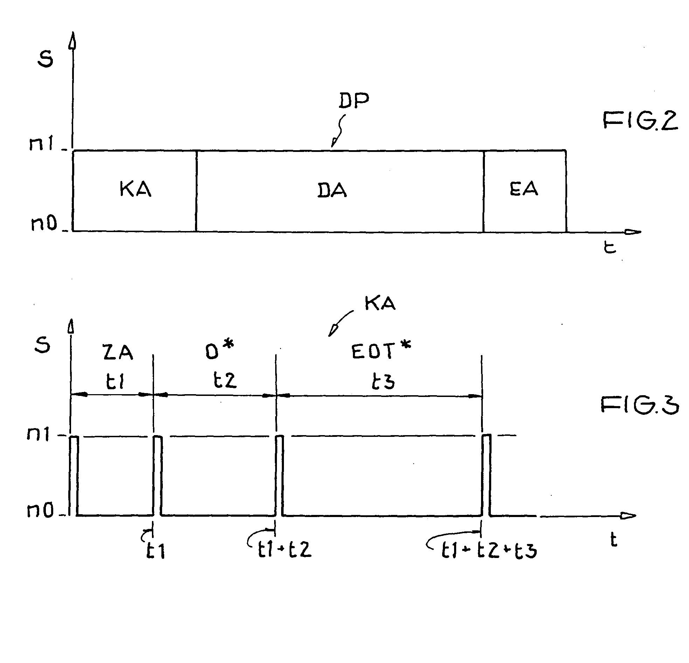

Fig. 2 zeigt ein schematisches Diagramm eines von der Basisstation an den Transponder übertragenen Datenpaketes DP von Fig. 1 am Ausgang der Modulator-/Demodulator-Einheit MD mit einem Kopfabschnitt KA, an den sich ein Datenabschnitt DA mit zu übertragenden Nutzdaten und ein Endabschnitt EA anschließt.

Der Kopfabschnitt KA von Fig. 2 ist in Fig. 3 detaillierter dargestellt. Im dargestellten Kopfabschnitt KA sind drei Symbole ZA, 0^{*} und EOT^{*} enthalten. Die Symbole ZA, 0^{*} und EOT^{*} werden durch aufeinanderfolgende Feldlücken oder sogenannte "notches" des von der Basisstation BS emittierten Trägersignals erzeugt, die in Fig. 3 als kurze Impulse dargestellt sind. Das erste Symbol ZA weist eine Dauer t1, das zweite Symbol 0^{*} eine Dauer t2 und das dritte Symbol EOT^{*} eine Dauer t3 auf, wobei die Zeitdauern t1 bis t3 durch die Zeiterfassungseinheit ZE von Fig. 1 ermittelt werden. Wenn die Zeiterfassungseinheit ZE als digitale Zählerschaltung DZS realisiert ist, wird jeweils ein den Zeitdauern t1 bis t3 zugehöriger Zählerwert im Speicher SP der Steuereinheit ST abgespeichert. Wenn die Zeiterfassungseinheit ZE als RC-Schaltung RCS realisiert ist, wird entsprechend ein erzielter Spannungswert im Speicher SP abgelegt.

Die Taktfrequenz f bzw. der Ladestrom I der Zeiterfassungseinheit ZE wird durch die Steuereinheit ST nach dem Start des Transponders TR mit einem Minimalwert initialisiert, so dass sich ein minimaler Stromverbrauch des Transponders TR ergibt. Dies ermöglicht ein Anlaufen des Transponders TR auch im Fernfeld der Basisstation BS.

Bei Empfang eines ersten von der Basisstation BS gesendeten Datenpakets DP, d.h. nachdem die Zeitdauer t1 des ersten Symbols ZA ermittelt wurde, wird die Taktfrequenz f der Zählerschaltung DZS bzw. der Ladestrom I der RC-Schaltung RCS im Transponder in Abhängigkeit von der ermittelten Zeitdauer t1 eingestellt. Hierzu wird der zur Zeitdauer t1 gehörige Zähler- bzw. der Spannungswert in der Steuereinheit ST mit einer in deren Speicher SP hinterlegten Referenz verglichen. Wenn der Zählerwert bzw. der Spannungswert kleiner als die hinterlegte Referenz ist, erhöht die Steuereinheit ST die Taktfrequenz f bzw. den Ladestrom I. Andernfalls erfolgt keine Änderung. Die Erhöhung kann einstufig oder mehrstufig, beispielsweise proportional zur Differenz zwischen ermitteltem und hinterlegtem Wert, erfolgen. Durch die Erhöhung der Taktfrequenz f bzw. des Ladestroms I kann der Transponder TR mit höherer Datenübertragungsrate betrieben werden, da die Zeiterfassungseinheit ZE in dieser Betriebart die zu den Symbolen ZA, 0* und EOT* gehörigen Zeitdauern t1, t2, t3 noch zeitlich voneinander unterscheiden kann, obwohl die Unterschiede zwischen den Zeitdauern t1, t2, t3 aufgrund der höheren Datenübertragungsrate kleiner werden. Mit Hilfe der dynamischen Umschaltung der Taktfrequenz f bzw. des Ladestroms I lässt sich folglich ein großer Übertragungsratenbereich realisieren, wobei gleichzeitig durch das stromsparende Anlaufen des Transponders TR hohe Übertragungsreichweiten verwirklichbar sind.

Zur Übertragung der Nutzdaten im Datenabschnitt DA erzeugt die Basisstation aufeinanderfolgende Feldlücken, deren zeitlicher Abstand den zu übertragenden Zeichen entsprechen. Der Transponder bzw. dessen Zeiterfassungseinheit ZE misst mit der auf Basis der Zeit t1 eingestellten zeitlichen Auflösung den Abstand dieser Feldlücken und vergleicht die gemessenen Zeiten mit den Zeiten t2 und t3 der Symbole 0^{*} und EOT^{*}. Das Symbol 0^{*} bzw. dessen zugehörige Zeitdauer t2 dient hierbei zur Kodierung bzw. Dekodierung der binären Zeichen "0" bzw. "1", aus denen die zu übertragenden Nutzdaten im Datenabschnitt DA aufgebaut sind. Das Symbol EOT^{*} dient zur Kennzeichnung des Endes eines Datenpakets DP und wird im Endabschnitt EA des Datenpakets DP übertragen, wozu beliebige, aus t3 abgeleitete Signalformen verwendet werden können. Ein binäres Zeichen im Datenabschnitt DA, dessen Zeitdauer kleiner als die zum Symbol 0* gehörige Zeitdauer t2 ist, wird im Transponder TR als eine "0" interpretiert. Ein Zeichen, dessen Zeitdauer größer als t2 und kleiner als die zum Symbol EOT^{*} gehörige Zeitdauer t3 ist, wird als eine "1" interpretiert. Ist der zeitliche Abstand zwischen zwei aufeinanderfolgenden Feldlücken größer als t3, erkennt der Transponder TR das Ende eines Datenpakets.

Es ist alternativ möglich, zusätzlich zum Symbol ZA lediglich ein weiteres Symbol 0^{*} oder EOT^{*} zu übertragen und die anderen Zeitdauern durch vorbekannte Teilerverhältnisse bezüglich dieser Zeitdauer im Transponder zu berechnen.

Die Datenübertragung vom Transponder zur Basisstation kann ebenfalls mit der auf Basis der Zeit t1 eingestellten zeitlichen Auflösung, beispielsweise gemäß dem in der deutschen Patentanmeldung 102 04 347 beschriebenen Verfahren, erfolgen.

Der die Dekodierung bestimmende Parameter ist im gezeigten Ausführungsbeispiel die zeitliche Auflösung der Kodierung bzw. Dekodierung, es ist jedoch alternativ möglich, abhängig von der Zeichendarstellungsinformation weitere die Kodierungs- und/oder Dekodierungs-Betriebsart bestimmende Parameter einzustellen, beispielsweise die Art der Kodierung zwischen unterschiedlichen Kodierungsvarianten umzuschalten.

## Patentansprüche

1. Verfahren zur drahtlosen Datenübertragung zwischen einer Basisstation (BS) und einem, insbesondere passiven, Transponder (TR), bei dem
- zu übertragende Datenpakete (DP) auf elektromagnetische Trägerwellen aufmoduliert werden und
- die Datenpakete (DP) einen Kopfabschnitt (KA) mit mindestens einem Symbol (ZA, 0^{*}, EOT^{*}) und mindestens einen weiteren Abschnitt (DA) umfassen,
**dadurch gekennzeichnet, dass**
- im Transponder (TR) die Zeitdauer (t1) von wenigstens einem Symbol (ZA) im Kopfabschnitt (KA) ermittelt wird und
- in Abhängigkeit von der ermittelten Zeitdauer (t1) ein die Kodierungs- und/oder Dekodierungs-Betriebsart bestimmender Parameter (f, I) eingestellt wird.

2. Verfahren nach Anspruch 1, **dadurch gekennzeichnet, dass** der Parameter (f, l) die zeitliche Auflösung der Kodierung und/oder der Dekodierung bestimmt.

3. Verfahren nach einem der vorhergehenden Ansprüche, **dadurch gekennzeichnet, dass** der Parameter ein Ladestrom (I) einer RC-Schaltung (RCS) ist, die zur Ermittlung der Zeitdauern (t1, t2, t3) des oder der Symbole (ZA, 0^{*}, EOT^{*}) dient.

4. Verfahren nach Anspruch 1 oder 2, **dadurch gekennzeichnet, dass** der Parameter eine Taktfrequenz (f) einer Zählerschaltung (DZS) ist, die zur Ermittlung der Zeitdauern (t1, t2, t3) des oder der Symbole (ZA, 0^{*}, EOT^{*}) dient.

5. Verfahren nach einem der vorhergehenden Ansprüche, **dadurch gekennzeichnet, dass** der Parameter (f, l) in Abhängigkeit von der ermittelten Zeitdauer (t1) des ersten Symbols (ZA) im Kopfabschnitt (KA) eingestellt wird.

6. Verfahren nach Anspruch 3 oder 5, **dadurch gekennzeichnet, dass** der Ladestrom (I) vor dem Empfang eines ersten Datenpakets (DP) einen vorgebbaren Minimalwert einnimmt, der bei Empfang des ersten Datenpakets (DP) erhöht wird, wenn ein zur ermittelten Zeitdauer (t1) des Symbols (ZA) gehöriger Spannungswert der RC-Schaltung (RCS) kleiner als oder gleich groß wie ein einstellbarer Grenzwert ist, und beibehalten wird, wenn der zu der Zeitdauer (t1) des Symbols (ZA) gehörige Spannungswert größer als der einstellbare Grenzwert ist.

7. Verfahren nach Anspruch 4 oder 5, **dadurch gekennzeichnet, dass** die Taktfrequenz (f) vor dem Empfang eines ersten Datenpakets (DP) einen vorgebbaren Minimalwert einnimmt, der bei Empfang des ersten Datenpakets (DP) erhöht wird; wenn ein zur ermittelten Zeitdauer (t1) des Symbols (ZA) gehöriger Zählerwert der Zählerschaltung (DZS) kleiner als oder gleich groß wie ein einstellbarer Grenzwert ist, und beibehalten wird, wenn der zu der Zeitdauer (t1) des Symbols (ZA) gehörige Zählerwert größer als der einstellbare Grenzwert ist.

8. Verfahren nach einem der vorhergehenden Ansprüche, **dadurch gekennzeichnet, dass** der mindestens eine weitere Abschnitt ein Datenabschnitt (DA) ist, dessen Daten mit Hilfe mindestens eines weiteren Symbols (0^{*}, EOT^{*}) des Kopfabschnitts (KA) kodiert und übertragen werden.
